# EUROPEAN PATENT SPECIFICATION

(11) **EP 2 304 112 B1**
(45) Date of publication and mention of the grant of the patent: **03.01.2018**
(21) Application number: 09794724.6
(22) Date of filing: 22.06.2009
(51) Int. Cl.: E02F 9/22, F16B 3/00

(54) **VALVE FASTENING MEANS**
VENTILBEFESTIGUNGSMITTEL
MOYENS DE FIXATION DE SOUPAPE

(30) Priority: 07.07.2008 SE 0801630
(43) Date of publication of application: 06.04.2011
(73) Proprietor: Nordhydraulic AB, 872 24 Kramfors (SE)
(72) Inventor: LUNDGREN, Bertil, 872 96 Bjärtrå (SE)
(74) Representative: Bartels & Partner
(86) International application number: PCT/SE2009/050782
(87) International publication number: WO 2010/005370

(56) References cited:
- EP-A1- 1 365 074
- US-A- 4 106 630
- US-A- 4 915 419
- US-A- 5 082 217
- US-A- 5 082 217
- US-A- 5 788 198

## Description

### TECHNICAL FIELD OF THE INVENTION

The present invention relates to valve fastening system with a valve fastening means for attaching a hydraulic valve to a tractor with a front end loader.

### BACKGROUND OF THE INVENTION

Tractors with front end loaders and any associated tools that are operated hydraulically usually include a valve arranged at the attachment point of the front end loader on the tractor or on a foundation on the tractor. This valve connects the hydraulics of the tractor with the hydraulics of the front end loader.

Conventional valves include a number of screw holes, which enable attachment to an attachment plate that is mounted on a custom made fastening means on the tractor. One problem is that the valve is relatively heavy and that it is coupled to relatively stiff hydraulic hoses, which contribute to make it difficult to handle and difficult to mount.

US 4 915 419 discloses an attachment means with two slits arranged in a common line, wherein one slit is widened at an end to form an opening. Further attachment means are disclosed in EP 1 365 074 A1, US 4 106 630 and US 5 082 217.

### SUMMARY OF THE INVENTION

In view of the foregoing, one object with the present invention is to provide a valve fastening means that simplifies engaging and disengaging of a valve on a tractor with a front end loader. Another object is to provide a valve fastening means that is cheaper than conventional ones.
A common idea of the invention is that it should be possible in a first step to attach the valve fastening means, in a second step to adjust the position of it, and in a third step to lock it in place, and that one person can readily perform all of the steps without any help from another person.
This may be accomplished with the valve fastening means according to the invention as defined in the independent claim.

According to the invention, the invention relates to a valve fastening system for attachment of a hydraulic valve to a tractor including the valve, a valve fastening means for attachment of the hydraulic valve to a tractor, and screws, the valve fastening means comprising a tractor part adapted to be attached to a tractor and a valve part adapted for direct assembly of the valve, wherein the valve comprises at least two screw holes, each adapted to receive a screw, wherein the valve part of the valve fastening means comprises at least two slits, of which at least a first slit comprises an opening adapted to let the head of the screw pass, and of which each slit comprises a groove that is sufficiently narrow to prevent the head of the respective screw from passing but sufficiently wide to allow the thread of the respective screw to pass, and wherein the grooves are parallel to each other so that the valve, when attached to the valve fastening means without having the screws fully tightened, can be moved along the grooves in such a way that the screws are moved in their respective groove, wherein a second one of the slits does not have any opening for letting the head of the screw pass, which second slit is displaced from the slits with an opening and from the position of the screw holes on the valve, whereby the screw, which extends through the second slit without an opening, has to be screwed out in order to enable movement of the valve to a position where the screws that extend through the slits with an opening are positioned just in front of these openings.

In a preferred embodiment, the valve fastening means comprises three slits, of which at least two slits each comprise an opening adapted to let the head of the screw pass, and of which all slits each comprise a groove that is sufficiently narrow to prevent the head of the screw pass from passing, but sufficiently wide to allow the thread of the screw to pass.

In another preferred embodiment, the grooves are parallel to each other so that the valve, when mounted in the valve fastening means without having the screws fully tightened, can be moved along the grooves in such a way that the screws are moved in their respective grooves.

Preferably, one of the slits does not have any opening for letting the head of the screw pass, and optionally this slit is displaced from the slits with an opening and from the position of the screw holes on the valve, whereby the screw that is extending through the slit that does not have any opening has to be screwed out in order to enable movement of the valve to a position where the screws, which are extending through the slits that have an opening, are positioned just in front of these openings.

In yet another preferred embodiment, the valve part comprises three slits. A first slit and a second slit are arranged one after the other in a common line, and a third slit is arranged in parallel, but vertically displaced in relation to the other two slits. Each of the first slit and the third slit comprises an opening adapted to let the heads of the respective screws pass and a first groove that is sufficiently narrow to prevent the head of the respective screw from passing, but sufficiently wide to allow the thread of the respective screw to pass, and that extends in parallel and in the same direction in relation to their respective opening, and wherein the second slit comprises a groove, but not an opening.

Preferably, the third slit comprises a second groove that extends in parallel but in an opposite direction from the opening of the slit in relation to the first groove.

In yet another preferred embodiment, the slits are arranged relative to each other in such a way that the valve fastening means can be attached to the tractor in two different orientations, of which one is upside-down-i.e., rotated by an angle of 180°-in relation to the other, whereby the valve can be arranged properly oriented on the valve fastening means irrespective of the orientation of the valve fastening means on the tractor.

Preferably, the tractor part and the valve part are arranged at an angle to each other.

One advantage of the present invention over conventional valve fastening means is that no attachment plate is required. Previously, as described above, the valve has been attached to an attachment plate and thereafter the attachment plate has been attached to an holder intended for this purpose. Thanks to the invention the valve fastening means can be attached to the tractor, and the valve can be attached directly to the valve fastening means in a simple and reliable way.

Embodiments of the invention are defined in the dependent claims. Other objects, advantages and novel features of the invention will become apparent from the following detailed description of the invention when considered in conjunction with the accompanying drawings and claims.

### BRIEF DESCRIPTION OF THE DRAWINGS

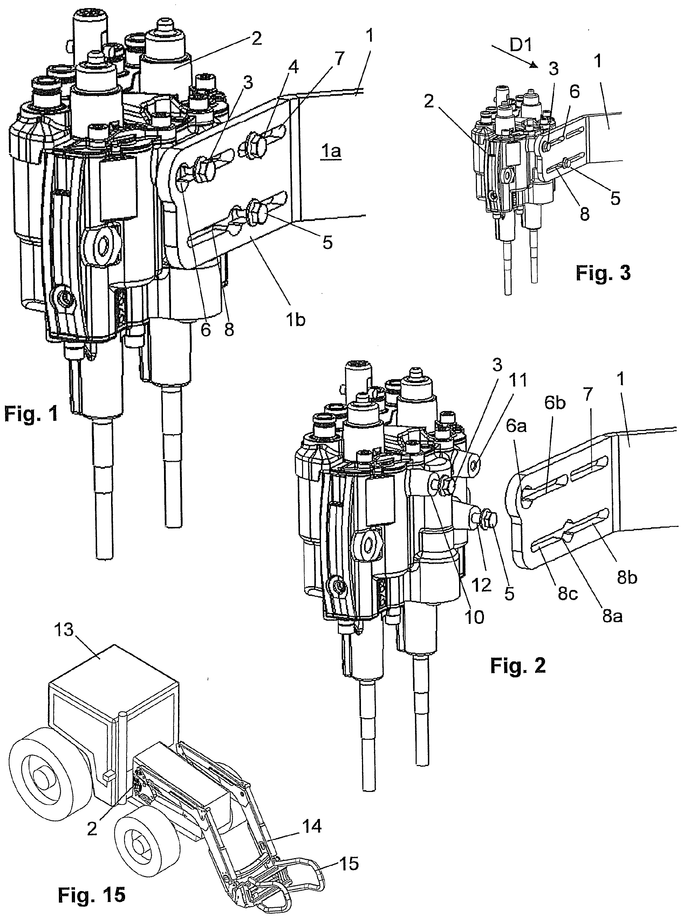

Preferred embodiments of the invention will now be described with reference to the accompanying drawings, wherein
- Fig. 1: schematically illustrates a valve fastening means according to the invention, to which a valve is attached;
- Figs. 1-6: schematically illustrate the process from the situation when a valve is threaded on to the valve fastening means until the situation when the valve is attached to the valve fastening means;
- Figs. 7-10: schematically illustrate a valve that is attached to a valve fastening means according to a second embodiment of the invention;
- Figs. 11-14: schematically illustrate a valve that is attached to a valve fastening means according to the second embodiment, wherein the valve fastening means is turned upside-down with regard to Figs. 7-10; and
- Fig. 15: schematically illustrates a perspective view of a tractor with a front end loader and an attached valve.

### DETAILED DESCRIPTION OF EMBODIMENTS

Fig. 15 schematically illustrates a perspective view of a tractor 13 with a front end loader 14 and an attached valve 2. The front end loader 14 and the tool 15 belonging to it are operated using hydraulics of the tractor via a valve 2 that is arranged at the attachment point of the front end loader 14 on the tractor 13 or on a foundation on the tractor 13. The valve connects the hydraulics of the tractor with the hydraulics of the front end loader. The invention relates to improvements associated with the valve fastening means which is used to attach the valve to the tractor.

As shown in Fig. 1 the valve fastening means comprises two main parts that are put at an angle to each other. A first part, which hereinafter will be referred to as tractor part 1a, is intended to be attached in a suitable manner and at a suitable place on the tractor. A second part, which hereinafter will be referred to as valve part 1b, is adapted for attachment to a valve 2. As shown in Fig. 1, three slits 6, 7 and 8 are arranged in the valve part 1b and three screws 3, 4 and 5 extend into the valve.

Figs. 2-6 schematically illustrate one embodiment of a method for attaching a valve to a valve fastening means according to the present invention.

As shown in Fig. 2, the valve is provided with three screw holes 10, 11 and 12, which are adapted to receive the screws 3, 4 and 5. The screw holes 10 and 11 are arranged at the same height or in a horizontal line and the screw holes 11 and 12 are arranged in the same vertical line, whereby the three screw holes form a right-angled triangle. In Fig. 2, the valve is shown in the situation when it is going to be attached to the valve fastening means. In this situation, two screws 3 and 5 have been screwed in a few turns into two of the screw holes 10 and 12, respectively. However, the screw hole 11 is empty at this stage. The slits 6 and 8 are each provided with an opening 6a and 8a. The screw heads 3 and 5 can be inserted in the openings 6a and 8a, respectively, in order to attach the valve before it is adjusted laterally and finally fixed.

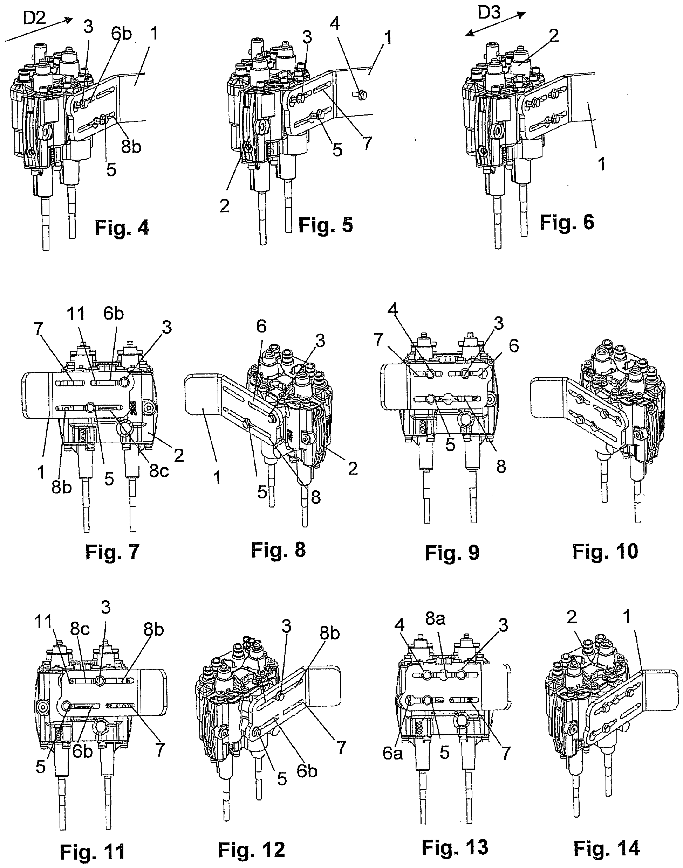

Fig. 3 schematically illustrates the valve on the valve fastening means after the screw heads 3 and 5 have been moved in the direction D1 through the openings 6a and 8a in the slits 6 and 8, respectively. Thereafter, as shown in Fig. 4, the valve can be moved in direction D2, whereby the screws are displaced from the openings 6a and 8a in the longitudinal grooves 6b and 8b, respectively.

When the valve has been moved to a desired position, the valve can be fixed. This is accomplished by, as shown in Fig. 5, inserting the remaining screw 4 into the hitherto empty slit 7. This slit in the present embodiment is not provided with any opening and consists only of a groove, which groove corresponds to the grooves 6b and 8b in the slits 6 and 8, respectively. The reason why there is no opening is that the screw 4 is intended to be screwed into the slit 7 after the valve has been attached to the valve fastening means 1. Hence, there is no need for any opening. Moreover, the lack of any opening in the slit 7 efficiently locks the valve in place, since the screw has to be removed in order to remove the valve 2. The slit 7 is with advantage displaced relative to the slits 6 and 8 in such a way that the screws 3 and 5 have to be moved into their respective grooves 6b and 8b in order to make the hole 11 available through the slit 7 and to make it possible to screw the screw 4 into the hole 11 (see Fig. 2).

With advantage, the screws 3 and 5, which only have been screwed in a few turns, are screwed home at the same time as the last screw 4 is tightened. Thereby, the valve position is fixed. Before the screws 3, 4 and 5 are screwed home, it is, as indicated in Fig. 6, possible to laterally adjust the valve 1 in the direction D3.

Figs. 7-14 schematically illustrate a second embodiment of the valve fastening means 1 that is mirrored with regard to the valve fastening means shown in Figs. 1-6. Also, the hole pattern of the screw holes 10-12 on the valve is mirrored with regard to the valve shown in Figs. 1-6. However, the same reference numbers are used in all figures independently of whether the structures are mirrored or not.

In Figs. 7 and 8, the valve fastening means 1 and the valve are in the relative positions that correspond to the relative positions in Fig. 3, i.e., with the screws 3 and 5 in front of the openings 6a and 8a. From Fig. 7, it is appreciated that no screw hole 11 is available through the slit 7 in this position. Instead the right part of the screw hole is visible through the groove 6b. Thus, the valve has to be moved to the left with regard to the valve fastening means, i.e., towards the position that is shown in Figs. 9 and 10, before the screw can be inserted into the last screw hole 11.

One advantage of the valve fastening means according to the invention is that it is turnable, i.e., the valve part 1b can be attached in any orientation on the tractor with maintained functionality.

Figs. 11-14 show the second embodiment of the valve fastening means 1 arranged upside-down with regard to the arrangement in Figs. 7-10. Thus, the slit 8 is arranged in an upper part, and the slits 6 and 7 are arranged below the slit 8. The screw 3, which is arranged in the screw hole 10 on the valve, is in this embodiment inserted through the opening 8a, while the screw 5, which is arranged in the screw hole 12, is inserted through the opening 6a. In accordance with the function of the valve fastening means when it is arranged in the opposite orientation (upside-down), as shown in Figs. 7-10, the third screw hole 11 is covered sufficiently much to not be available as long as the screws remain in the openings 6a and 8a. However, in Fig. 11 a portion of the screw hole 11 can be observed through the left part of the groove 8c.

In the situation that is shown in Figs. 13 and 14, the valve 2 has been displaced to the right with regards to the valve fastening means 1 and the third screw 4 has been screwed in through a second groove 8c in the slit 8. Thus, the slit 7 is not used at all when the valve fastening means 1 has this orientation. The function of the slit 7 is then provided by the left groove 8c in the slit 8.

While the invention has been described in connection with what are presently considered to be the most practical and preferred embodiments, it is to be understood that the invention is not to be limited to the disclosed embodiments. On the contrary, it is intended to cover various modifications and equivalent arrangements within the appended claims.

## Claims

1. Valve fastening system for attachment of a hydraulic valve (2) to a tractor including the valve (2), a valve fastening means (1) for attachment of the hydraulic valve (2) to a tractor, and screws (3, 4, 5), the valve fastening means (1) comprising a tractor part (1a) adapted to be attached to a tractor and a valve part (1b) adapted for direct assembly of the valve (2), wherein the valve (2) comprises at least two screw holes (10, 11, 12), each adapted to receive a screw (3, 4, 5), **characterised in that** the valve part (1b) of the valve fastening means comprises at least two slits (6, 7, 8), of which at least a first slit (6, 8) comprises an opening (6a, 8a) adapted to let the head of the screw (3, 5) pass, and of which each slit comprises a groove (6b, 7, 8b, 8c) that is sufficiently narrow to prevent the head of the respective screw (3, 4, 5) from passing but sufficiently wide to allow the thread of the respective screw (3, 4, 5) to pass, and wherein the grooves (6b, 7, 8b, 8c) are parallel to each other so that the valve (2), when attached to the valve fastening means (1) without having the screws (3, 4, 5) fully tightened, can be moved along the grooves (6b, 7, 8b, 8c) in such a way that the screws (3, 4, 5) are moved in their respective groove (6b, 7, 8b, 8c), wherein a second one of the slits (7) does not have any opening for letting the head of the screw (4) pass, which second slit (7) is displaced from the slits (6, 8) with an opening (6a, 8a) and from the position of the screw holes (10, 11, 12) on the valve (2), whereby the screw (4), which extends through the second slit (7) without an opening, has to be screwed out in order to enable movement of the valve (2) to a position where the screws that extend through the slits (6, 8) with an opening (6a, 8a) are positioned just in front of these openings (6a, 8a).

2. Valve fastening system according to claim 1, wherein the valve fastening means (1) comprises three slits (6, 7, 8), of which at least two slits (6, 8) each comprise an opening (6a, 8a) adapted to let the heads of the screws (3, 5) pass.

3. Valve fastening system according to claim 2, wherein a first slit (6) and a second slit (7) are arranged one after the other in a common line, and a third slit (8) is arranged in parallel, but vertically displaced, in relation to the other two slits (6, 7), and wherein the first slit (6) and the third slit (8) each comprise an opening (6a, 8a) adapted to let the heads of the respective screws (3, 5) pass and a first groove (6b, 8b) that is sufficiently narrow to prevent the head of the respective screw (3, 5) from passing but sufficiently wide to allow the thread of the respective screws (3, 5) to pass and that extends in parallel and in the same direction in relation to their respective openings (6a, 8a), and wherein the second slit (7) comprises a groove but not an opening.

4. Valve fastening system according to claim 3, wherein the third slit (8) comprises a second groove (8c) that extends in parallel but in an opposite direction from the opening (8a) of the slit (8) in relation to the first groove (8b).

5. Valve fastening system according to any of the preceding claims, wherein said slits (6, 7, 8) are arranged relative to each other in such way that the valve fastening means (1) can be attached to the tractor in two different orientations, of which one is upside-down-i.e., rotated by an angle of 180°-in relation to the other, whereby the valve (2) properly oriented can be arranged on the valve fastening means (1) irrespective of the orientation of the valve fastening means (1) on the tractor.

6. Valve fastening system according to any of the preceding claims, wherein the tractor part (1a) and the valve part (1b) are arranged at an angle to each other.

## Patentansprüche

1. Ventilbefestigungssystem zum Befestigen eines Hydraulikventils (2) an einem Traktor, einschließlich des Ventils (2), eines Ventilbefestigungsmittels (1) zum Befestigen des Hydraulikventils (2) an einem Traktor, und Schrauben (3, 4, 5), wobei das Ventilbefestigungsmittel (1) ein Traktorteil (1a), das zum Anbringen an einen Traktor geeignet ist und ein Ventilteil (1b), das zum direkten Montieren des Ventils (2) geeignet ist, umfasst, wobei das Ventil (2) mindestens zwei Schraubenlöcher (10, 11, 12) aufweist, von denen jede zum Aufnehmen einer Schraube (3, 4, 5) ausgebildet ist, **dadurch gekennzeichnet, dass** der Ventilteil (1b) des Ventilbefestigungsmittels mindestens zwei Schlitze (6, 7, 8) umfasst, von denen mindestens ein erster Schlitz (6, 8) eine Öffnung (6a, 8a) aufweist, die so ausgebildet ist, dass sie den Kopf der Schraube (3, 5) passieren lässt, und von denen jeder Schlitz eine Nut (6b, 7, 8b, 8c) aufweist, die ausreichend eng ist, um zu verhindern, dass der Kopf der jeweiligen Schraube (3, 4, 5) passiert, aber ausreichend breit ist, um das Gewinde der jeweiligen Schraube (3, 4, 5) passieren zu lassen, und wobei die Nuten (6b, 7, 8b, 8c) parallel zueinander sind, so dass das Ventil (2), wenn es an dem Ventilbefestigungsmittel (1) befestigt ist, ohne die Schrauben (3, 4, 5) vollständig angezogen zu haben, entlang der Nuten (6b, 7,8b, 8c) so bewegt werden kann, dass die Schrauben (3, 4, 5) in ihrer jeweiligen Nut (6b, 7, 8b, 8c) bewegt werden, wobei ein zweiter der Schlitze (7) keine Öffnung aufweist, um den Kopf der Schraube (4) passieren zu lassen, wobei dieser zweite Schlitz (7) aus den Schlitzen (6, 8) mit einer Öffnung (6a, 8a) und von der Position der Schraubenlöcher (10, 11, 12) auf dem Ventil (2) versetzt ist, wobei die Schraube (4), die sich ohne Öffnung durch den zweiten Schlitz (7) erstreckt, herausgedreht werden muss, um eine Bewegung des Ventils (2) in eine Position zu ermöglichen, in der die Schrauben, die sich mit einer Öffnung (6a, 8a) durch die Schlitze (6, 8) erstrecken, genau vor diesen Öffnungen (6a, 8a) positioniert sind.

2. Ventilbefestigungssystem nach Anspruch 1, wobei das Ventilbefestigungsmittel (1) drei Schlitze (6, 7, 8) umfasst, von denen mindestens zwei Schlitze (6, 8) jeweils eine Öffnung (6a, 8a) aufweisen, die so ausgebildet ist, dass sie die Köpfe der Schrauben (3, 5) passieren lässt.

3. Ventilbefestigungssystem nach Anspruch 2, wobei ein erster Schlitz (6) und ein zweiter Schlitz (7) hintereinander in einer gemeinsamen Linie angeordnet sind und ein dritter Schlitz (8) parallel, aber vertikal versetzt, in Bezug auf die anderen beiden Schlitzen (6, 7) angeordnet ist, und wobei der erste Schlitz (6) und der dritte Schlitz (8) jeweils eine Öffnung (6a, 8a) umfassen, die so ausgebildet ist, dass sie die Köpfe der jeweiligen Schrauben (3, 5) passieren lässt und eine erste Nut (6b, 8b), die ausreichend eng ist, um zu verhindern, dass der Kopf der jeweiligen Schraube (3, 5) passiert, aber ausreichend breit, um das Gewinde der jeweiligen Schrauben (3, 5) passieren zu lassen, und die sich parallel und in die gleiche Richtung in Bezug auf ihre jeweiligen Öffnungen (6a, 8a) erstreckt, und wobei der zweite Schlitz (7) eine Nut, aber keine Öffnung aufweist.

4. Ventilbefestigungssystem nach Anspruch 3, wobei der dritte Schlitz (8) eine zweite Nut (8c) aufweist, die sich parallel, aber entgegengesetzt zur Öffnung (8a) des Schlitzes (8) in Bezug auf die erste Nut (8b) erstreckt.

5. Ventilbefestigungssystem nach einem der vorhergehenden Ansprüche, wobei die Schlitze (6, 7, 8) so relativ zueinander angeordnet sind, dass das Ventilbefestigungsmittel (1) am Traktor in zwei verschiedenen Ausrichtungen angebracht werden kann, von denen eine in Bezug zur anderen umgekehrt ist, d.h. um einen Winkel von 180° gedreht, wobei das richtig orientierte Ventil (2) auf dem Ventilbefestigungsmittel (1) unabhängig von der Ausrichtung des Ventilbefestigungsmittels (1) auf dem Traktor angeordnet werden kann.

6. Ventilbefestigungssystem nach einem der vorhergehenden Ansprüche, wobei der Traktorteil (1a) und der Ventilteil (1b) in einem Winkel zueinander angeordnet sind.

## Revendications

1. Système de fixation de soupape pour l'adjonction d'une soupape (2) hydraulique à un tracteur, comprenant la soupape (2), un moyen (1) de fixation de soupape pour adjoindre la soupape (2) hydraulique à un tracteur et des vis (3, 4, 5), le moyen (1) de fixation de soupape comprenant une partie (1a) de tracteur propre à être adjointe à un tracteur et une partie (1b) de soupape propre à un montage direct de la soupape (2), la soupape (2) comprenant au moins deux taraudages (10, 11, 12), chacun propre à recevoir une vis (3, 4, 5),
**caractérisé en ce que**
la partie (1b) de soupape du moyen de fixation de soupape comprend au moins deux fentes (6, 7, 8), dont au moins une première fente (6, 8) comprend une ouverture (6a, 8a) propre à laisser passer la tête de la vis (3, 5) et dont chaque fente comprend une rainure (6b, 7, 8b, 8c), qui est suffisamment étroite pour empêcher la tête de la vis (3, 4, 5) respective de passer, mais suffisamment large pour permettre au filet de la vis (3, 4, 5) respective de passer et dans lequel les rainures (6b, 7, 8b, 8c) sont parallèles entre elles, de sorte que la soupape (2), lorsqu'elle est adjointe au moyen (1) de fixation de soupape, sans que les vis (3, 4, 5) soient serrées complètement, peut se déplacer le long des rainures (6b, 7, 8b, 8c) de façon à déplacer les vis (3, 4, 5) dans leur rainure (6b, 7, 8b, 8c) respective, une deuxième des fentes (7) n'ayant pas d'ouverture pour laisser passer la tête de la vis (4), la deuxième fente (7) étant à distance des fentes (6, 8) ayant une ouverture (6a, 8a) et de la position des taraudages (10, 11, 12) sur la soupape (2), la vis (4), qui passe dans la deuxième fente (7) sans une ouverture, devant être dévissée afin de permettre un déplacement de la soupape (2) à une position où les vis, qui passent dans les fentes (6, 8) ayant une ouverture (6a, 8a), sont placées juste en face de ces ouvertures (6a, 8a).

2. Système de fixation de soupape suivant la revendication 1, dans lequel le moyen (1) de fixation de soupape comprend trois fentes (6, 7, 8), dont au moins deux fentes (6, 8) comprennent chacune une ouverture (6a, 8a) propre à laisser passer les têtes des vis (3, 5).

3. Système de fixation de soupape suivant la revendication 2, dans lequel une première fente (6) et une deuxième fente (7) sont disposées l'une après l'autre dans une ligne commune et une troisième fente (8) est disposée en parallèle, mais à distance verticalement, par rapport les deux autres fentes (6, 7) et dans lequel la première fente (6) et la troisième fente (8) comprennent chacune une ouverture (6a, 8a) propre à laisser passer les têtes des vis (3, 5) respectives et une première rainure (6b, 8b), qui est suffisamment étroite pour empêcher la tête de la vis (3, 5) respective de passer, mais suffisamment large pour permettre au filet des vis (3, 5) respectives de passer et qui s'étend, parallèlement et dans le même sens, en relation à leurs ouvertures (6a, 8a) respectives et dans lequel la deuxième fente (7) comprend une rainure mais pas d'ouverture.

4. Système de fixation de soupape suivant la revendication 3, dans lequel la troisième fente (8) comprend une deuxième rainure (8c), qui s'étend en parallèle, mais dans un sens contraire, à partir de l'ouverture (8a) de la fente (8), de la première rainure (8b).

5. Système de fixation de soupape suivant l'une quelconque des revendications précédentes, dans lequel les fentes (6, 7, 8) sont disposées les unes par rapport aux autres, de manière à pouvoir adjoindre le moyen (1) de fixation de soupape au tracteur suivant deux orientations différentes, dont l'une est renversée, c'est-à-dire tournée d'un angle de 180° par rapport à l'autre, la soupape (2), orientée correctement, pouvant être disposée sur le moyen (1) de fixation de soupape quelle que soit l'orientation du moyen (1) de fixation de soupape sur le tracteur.

6. Système de fixation de soupape suivant l'une quelconque des revendications précédentes, dans lequel la partie (1a) de tracteur et la partie (1b) de soupape font un angle l'une avec l'autre.
